# DEMANDE DE BREVET EUROPEEN

(11) **EP 1 072 737 A1**
(43) Date de publication de la demande: **31.01.2001**
(21) Numéro de dépôt: 00480072.8
(22) Date de dépôt: 28.07.2000
(51) Int. Cl.: E04H 13/00, B01D 53/04, B01D 53/14, B01D 47/02

(54) **Appareil d'épuration, de désinfection et de désodorisation des effluents gazeux d'une cellule mortuaire étanche**

(30) Priorité: 30.07.1999 FR 9909935
(71) Demandeur: Roard, Dany Lilian, 06250 Mougins (FR); Roard, Yann, 06700 St Laurent du Var (FR)
(72) Inventeur: Roard, Dany Lilian, 06250 Mougins (FR); Roard, Yann, 06700 St Laurent du Var (FR)

(57) **Abrégé**

La présente invention est un appareil d'épuration, de désinfection et de désodorisation des effluents gazeux d'une cellule mortuaire étanche, utilisant en série un épurateur à charbons actifs, éventuellement d'autres actifs solides, et d'un épurateur liquide constitué de 1 à 4 chambre(s) de barbotage recevant un liquide ou différents liquides assurant les capacités d'épuration, de désinfection et de désodorisation. Ce double dispositif, qui peut être associé à un système d'entrée d'air par valve solide ou liquide, constitue la présente invention. Cette dernière est capable de supporter des gros débits gazeux (50 litres par heure sur une période courte, de 2 à 3 semaines) et conserve une bonne efficacité sur les débits normaux (30 litres par jour pendant plusieurs années).

## Description

La présente invention a été conçue pour répondre aux insuffisances des dispositifs d'épuration, de désinfection et de désodorisation placés actuellement dans les cellules mortuaires étanches : caveaux, enfeux...
En effet, les systèmes les plus répandus, utilisés pour l'épuration des effluents gazeux provenant d'enceintes mortuaires étanches, sont des dispositifs d'épuration à charbons actifs, traités ou non. Ils répondent en particulier aux débits imposés pour les tests requis par la norme NF P98049. Toutefois, et alors que le service qui leur est demandé est de cinq ans au moins, d'une part ces dispositifs d'épuration laissent passer au bout de quelques semaines une partie des molécules qu'ils ont charge d'absorber, d'autre part ils n'apportent aucun effet bactéricide.
Les dispositifs d'épuration et de désinfection par barbotage dans un liquide de traitement épurateur, désinfectant, dans les conditions de forts débits gazeux, n'absorbent eux, que 2 à 3 % des molécules indésirables dans les effluents gazeux, alors qu'aux faibles débits - 30 litres par jour -, ils remplissent leur fonction pendant plusieurs années -brevet FR 8310204 de Mr Francis AUGIAS -.

Pour palier à ces inconvénients, la présente invention dispose en série d'un dispositif d'épuration solide et d'un dispositif d'épuration, de désinfection et de désodorisation liquide. Le dispositif d'épuration solide, par exemple à charbons actifs, traités ou non, joue le rôle d'amortisseur de charge en cas de gros débits, tandis que le dispositif d'épuration liquide, constitué de chambre(s) de barbotage - disposées en série lorsqu'elles sont au nombre de 2, 3 ou 4 - assure le traitement d'épuration, de désinfection et de désodorisation dans le temps et ce, pendant plusieurs années.

L'invention sera mieux comprise à l'aide du complément de description qui va suivre et qui se réfère au schéma annexé. Ce schéma est donné à titre d'illustration de l'invention et il ne constitue en aucun cas une limitation.

(A): Dispositif d'épuration solide ; (B) : Chambre(s) de barbotage ; (C) : Chambre mortuaire étanche ; (S) : Sortie des effluents gazeux à l'extérieur de l'enceinte mortuaire ; (E) : Entrée d'air frais, soit par un dispositif à valve solide (E1), soit par valve liquide (E2) ; (O) : Orifice de remplissage et de vidange.

La présente invention se caractérise par un dispositif d'épuration solide (A), ce dispositif contenant soit un seul compartiment à charbons actifs, traités ou non traités, soit plusieurs compartiments, disposés dans ce cas en série, contenant respectivement des charbons actifs, traités ou non traités, un (des) acide(s) à l'état solide, comme par exemple l'acide sulfamique, pour absorber les amines et l'ammoniaque, des chlorures de métaux lourds, comme par exemple du chlorure mercurique, pour absorber les mercaptans.

A ce dispositif d'épuration solide (A), la présente invention est caractérisée par l'adjonction en série d'un dispositif d'épuration, de désinfection et de désodorisation liquide constitué par 1 à 4 chambre(s) de barbotage (B) - disposées en série lorsqu'elles sont au nombre de 2, 3 ou 4 -. Ce(s) chambre(s) de barbotage reçoivent chacune un liquide dans lequel les effluents gazeux sortant du dispositif d'épuration solide barbotent tour à tour pour subir un traitement d'épuration, de désinfection et de désodorisation.

Ce liquide peut être identique ou différent dans un ou plusieurs compartiment(s), ceci de manière à optimiser l'épuration, la désinfection et la désodorisation par un effet :
- bactéricide, en employant par exemple une solution de Di-Propylène Glycol, du 2 butoxy éthanol avec de l'eau
- réducteur, pour traiter les aldéhydes et les cétones, en employant par exemple une solution de Di-Ethylène Glycol, d'eau et de permanganate de potassium
- acide, pour traiter les amines et l'ammoniaque, en employant par exemple une solution de Di-Ethylène Glycol, d'eau et d'acide sulfamique.

La présente invention se caractérise en ce qu'elle peut être associée à un dispositif d'entrée d'air dans le caveau avec une valve soit solide (E1), par exemple une valve en néoprène, soit liquide (E2) en faisant arriver l'air frais après barbotage dans un liquide peu volatile, tel que le DiEthylène Glycol, de 1 à 90 % en poids, et de l'eau, de 1 à 30 % en poids.

L'appareil d'épuration, de désinfection et de désodorisation des effluents gazeux d'une cellule mortuaire étanche, se caractérise en ce qu'il oblige les effluents gazeux issus de l'enceinte mortuaire étanche (C) à traverser successivement un dispositif d'épuration solide (A) et un dispositif d'épuration, de désinfection et de désodorisation liquide constitué de 1 à 4 chambres de barbotage (B) contenant un liquide épurateur, désinfectant et désodorisant, avant d'être rejeté à l'air libre.

L'appareil d'épuration, de désinfection et de désodorisation des effluents gazeux d'une cellule mortuaire étanche (C), est caractérisé en ce que le liquide épurateur, désinfectant et désodorisant peut être différent d'une chambre de barbotage (B) à l'autre, de manière à ce que chaque liquide soit spécialisé à une ou plusieurs capacités d'épuration, de désinfection et de désodorisation pour accroître globalement les capacités d'épuration, de désinfection et de désodorisation de cet appareil.

L'appareil d'épuration, de désinfection et de désodorisation des effluents gazeux d'une cellule mortuaire étanche (C), est caractérisé en ce que le liquide spécialisé d'une ou de plusieurs chambres de barbotage (B) possède une capacité acide pour assurer l'élimination des amines et de l'ammoniaque, sa formule contenant par exemple en poids et sans que ce soit limitatif : du Di-Ethylène Glycol, de 1 à 90 %, de l'acide sulfamique, de 0,5 à 30 % et de l'eau, de 0,5 à 20 %.

L'appareil d'épuration, de désinfection et de désodorisation des effluents gazeux d'une cellule mortuaire étanche (C), est caractérisé en ce que le liquide spécialisé d'une ou de plusieurs chambres de barbotage (B) possède une capacité réductrice pour traiter les aldéhydes et les cétones, sa formule contenant par exemple en poids et sans que ce soit limitatif : du Di-éthylène Glycol, de 1 à 90 %, du permanganate de potassium, de 0,5 à 20 %, et de l'eau, de 0,5 à 50 %.

L'appareil d'épuration, de désinfection et de désodorisation des effluents gazeux d'une cellule mortuaire étanche (C), est caractérisé en ce que le liquide spécialisé d'une ou de plusieurs chambres de barbotage (B) possède une capacité d'absorption des mercaptans, sa formule contenant par exemple en poids et sans que ce soit limitatif : du DiEthylène Glycol, de 1 à 90 %, du chlorure mercurique, de 0,1 à 5 %, et de l'eau, de 0,5 à 30 %.

L'appareil d'épuration, de désinfection et de désodorisation des effluents gazeux d'une cellule mortuaire étanche (C), est caractérisé en ce que le liquide spécialisé d'une ou de plusieurs chambres de barbotage (B) possède une capacité bactéricide, sa formule contenant par exemple en poids et sans que ce soit limitatif : du Di Propylène Glycol, de 1 à 90 %, du 2 Butoxy Ethanol, de 1 à 30 %, et de l'eau, de 1 à 30 %.

L'appareil d'épuration, de désinfection et de désodorisation des effluents gazeux d'une cellule mortuaire étanche (C), est caractérisé en ce que chaque chambre de barbotage (B) possède un orifice (O) étanche disposé sur la partie supérieure servant au remplissage et éventuellement à la vidange du liquide de traitement.

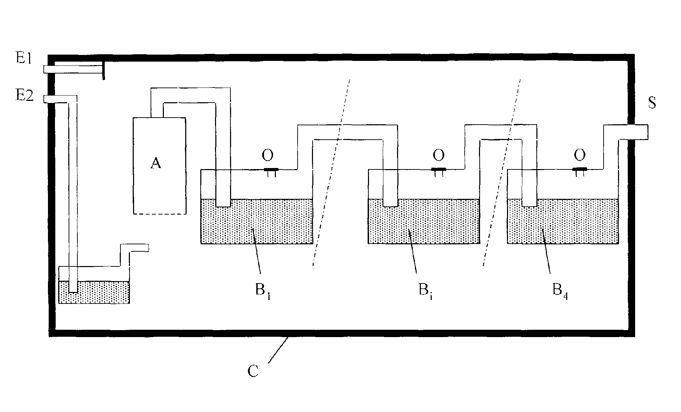

## Revendications

1. L'appareil d'épuration, de désinfection et de désodorisation des effluents gazeux d'une cellule mortuaire étanche, se caractérise en ce qu'il oblige les effluents gazeux issus de l'enceinte mortuaire étanche (C) à traverser successivement un dispositif d'épuration solide (A) et un dispositif d'épuration, de désinfection et de désodorisation liquide constitué de 1 à 4 chambres de barbotage (B) contenant un liquide épurateur, désinfectant et désodorisant, avant d'être rejeté à l'air libre.

2. Appareil, selon la revendication 1, se caractérisant par un dispositif d'épuration solide (A), ce dispositif contenant soit un seul compartiment à charbons actifs, traités ou non traités, soit plusieurs compartiments, disposés dans ce cas en série, contenant respectivement des charbons actifs, traités ou non traités, un (des) acide(s) à l'état solide, comme par exemple l'acide sulfamique, pour absorber les amines et l'ammoniaque, des chlorures de métaux lourds, comme par exemple du chlorure mercurique, pour absorber les mercaptans.

3. Appareil, selon la revendication 1, caractérisé en ce que le liquide épurateur, désinfectant et désodorisant peut être différent d'une chambre de barbotage (B) à l'autre, de manière à ce que chaque liquide soit spécialisé à une ou plusieurs capacités d'épuration, de désinfection et de désodorisation pour accroître globalement les capacités d'épuration, de désinfection et de désodorisation de cet appareil.

4. Appareil, selon la revendication 3, caractérisé en ce que le liquide spécialisé d'une ou de plusieurs chambres de barbotage (B) possède une capacité acide pour assurer l'élimination des amines et de l'ammoniaque, sa formule contenant par exemple en poids et sans que ce soit limitatif: du Di-Ethylène Glycol, de 1 à 90 %, de l'acide sulfamique, de 0,5 à 30 % et de l'eau, de 0,5 à 20 %.

5. Appareil, selon la revendication 3, caractérisé en ce que le liquide spécialisé d'une ou de plusieurs chambres de barbotage (B) possède une capacité réductrice pour traiter les aldéhydes et les cétones, sa formule contenant par exemple en poids et sans que ce soit limitatif : du Di-éthylène Glycol, de 1 à 90 %, du permanganate de potassium, de 0,5 à 20 %, et de l'eau, de 0,5 à 50 %.

6. Appareil, selon la revendication 3, caractérisé en ce que le liquide spécialisé d'une ou de plusieurs chambres de barbotage (B) possède une capacité d'absorption des mercaptans, sa formule contenant par exemple en poids et sans que ce soit limitatif : du DiEthylène Glycol, de 1 à 90 %, du chlorure mercurique, de 0,1 à 5 %, et de l'eau, de 0,5 à 30 %.

7. Appareil, selon la revendication 3, caractérisé en ce que le liquide spécialisé d'une ou de plusieurs chambres de barbotage (B) possède une capacité bactéricide, sa formule contenant par exemple en poids et sans que ce soit limitatif : du Di Propylène Glycol, de 1 à 90 %, du 2 Butoxy Ethanol, de 1 à 30 %, et de l'eau, de 1 à 30 %.

8. Appareil, selon la revendication 1, caractérisé en ce qu'il peut être associé à un dispositif d'entrée d'air dans le caveau avec une valve soit solide (E1), par exemple une valve en néoprène, soit liquide (E2) en faisant arriver l'air frais après barbotage dans un liquide peu volatile, tel que le DiEthylène Glycol, de 1 à 90 % en poids, et de l'eau, de 1 à 30 % en poids.

9. Appareil, selon la revendication 1, caractérisé en ce que chaque chambre de barbotage (B) possède un orifice (O) étanche disposé sur la partie supérieure servant au remplissage et éventuellement à la vidange du liquide de traitement.
